# EUROPÄISCHE PATENTSCHRIFT

(11) **EP 3 482 118 B1**
(45) Veröffentlichungstag und Bekanntmachung des Hinweises auf die Patenterteilung: **29.04.2020**
(21) Anmeldenummer: 17736627.5
(22) Anmeldetag: 29.06.2017
(51) Int. Cl.: F16L 37/107, F16L 37/113

(54) **VERBINDER FÜR EINE FLUIDLEITUNG**
CONNECTOR FOR A FLUID LINE
ACCOUPLEMENT POUR CONDUITE DE FLUIDE

(30) Priorität: 07.07.2016 DE 102016112529
(43) Veröffentlichungstag der Anmeldung: 15.05.2019
(73) Patentinhaber: NORMA Germany GmbH, 63477 Maintal (DE)
(72) Erfinder: BAUER, Andreas, 63785 Obernburg (DE); SCHINDLER, René, 63477 Maintal (DE)
(74) Vertreter: Patentanwälte Olbricht Buchhold Keulertz
(86) Internationale Anmeldenummer: PCT/EP2017/066189
(87) Internationale Veröffentlichungsnummer: WO 2018/007241

(56) Entgegenhaltungen:
- EP-A1- 2 906 812
- EP-A1- 2 990 708
- WO-A1-2009/082288
- DE-A1-102010 035 027
- DE-A1-102012 106 734

## Beschreibung

Die Erfindung betrifft einen Verbinder für eine Fluidleitung, aufweisend ein ringförmiges Gehäuse mit einem ersten Ende und einem zweiten Ende und einen Drehring, wobei der Drehring an dem zweiten Ende angeordnet ist und der Drehring mindestens ein Verbindungselement aufweist, das mit mindestens einer Haltegeometrie und mit mindestens einer Führungsgeometrie in Eingriff steht, wobei das mindestens eine Verbindungselement durch die Führungsgeometrie bei Rotation des Drehrings relativ zum Gehäuse in einer radialen Richtung bewegbar ist.

Das Verbinden von Rohren, Schläuchen, Anschlussstutzen oder anderen Fluidleitungen ist zum Beispiel in der Automobilindustrie, der Versorgungsindustrie oder in der Lüftungstechnik erforderlich. Solche Verbindungen müssen Anforderungen beispielsweise hinsichtlich ihrer Druckfestigkeit, Dichtheit, Temperaturbeständigkeit und/oder mechanischer Stabilität erfüllen. Diese Anforderungen können hinsichtlich der Sicherheit einer Anlage kritisch sein, insbesondere dann, wenn solche Verbindungen zum Anschluss von Kraftstofftanks oder in Kühlwasserkreisläufen von Kraftfahrzeugen verwendet werden.

Es ist bekannt, Fluidleitungen wie Schläuche, Rohre, Anschlussstutzen und/oder andere längliche Hohlkörper in vielfältiger Art miteinander zu verbinden. So kann ein Schlauch mit einem Rohr, ein Rohr mit einem Stutzen oder beispielsweise ein Schlauch mit einem Stutzen über einen entsprechenden Verbinder verbindbar sein.

Aus der EP 2 906 812 A1, der EP 2 990 708 A1, der DE 10 2012 106734 A1 und der DE 10 2010 035027 A1 ist jeweils ein Verbinder mit einem ringförmigen Gehäuse mit einem ersten Ende und einem zweiten Ende sowie einen Drehring bekannt, wobei der Drehring an dem zweiten Ende angeordnet ist und der Drehring mindestens ein Verbindungselement aufweist, das mit mindestens einer Haltegeometrie und mit mindestens einer Führungsgeometrie in Eingriff steht. Das mindestens eine Verbindungselement ist durch die Führungsgeometrie bei Rotation des Drehrings relativ zum Gehäuse in einer radialen Richtung bewegbar, wobei ein Verbindungselement über mindestens eine radial elastische Federgeometrie mit dem Drehring verbunden sein kann.

Eine Vorrichtung zum werkzeuglosen Verbinden zweier länglicher Hohlkörper (im Folgenden: Tuben) ist beispielweise in WO 2009 / 082 288 A1 gezeigt. Hierbei ist ein erstes Anschlussstück, an das ein erster Tubus befestigbar ist, als ringförmiges Gehäuse ausgebildet. Dieses erste Anschlussstück weist eine Buchsengeometrie auf. Ein zweites Anschlussstück oder ein zweiter Tubus ist als Stecker ausgebildet und weist eine Steckergeometrie auf. Das zweite Anschlussstück ist axial entlang einer zentralen Achse in das erste Anschlussstück einführbar und ist mittels der Vorrichtung werkzeuglos ver- und entriegelbar. Hierzu weist die Vorrichtung nach der Lehre der WO 2009 / 082 288 A1 einen Drehring, einen Führungsring und einen O-Ring auf, die innerhalb des Gehäuses axial nebeneinander angeordnet sind. Der O-Ring ist hierbei in axialer Richtung am weitesten von dem zweiten Anschlussstück entfernt, während der Drehring in axialer Richtung am nächsten an dem zweiten Anschlussstück angeordnet ist. Der Führungsring ist in axialer Richtung zwischen dem O-Ring und dem Drehring angeordnet, wobei in einer radialen Richtung der O-Ring zwischen dem ersten und dem zweiten Anschlussstück, das in das erste Anschlussstück hineinragt, angeordnet ist.

Die WO 2009 / 082 288 A1 offenbart, dass der Drehring, welcher rotierbar ist, eine Verschlussgeometrie aufweist, die mit der Buchsengeometrie des ersten Anschlussstücks und der Steckergeometrie des zweiten Anschlussstücks in Eingriff bringbar ist. Weiterhin ist durch die WO 2009 / 082 288 A1 gezeigt, dass der Führungsring eine Führungsgeometrie aufweist, durch die ein Teil der Verschlussgeometrie des Drehrings mit der Steckergeometrie außer Eingriff bringbar ist. Dieses außer Eingriff bringen erfolgt, wenn der Drehring gegen den Führungsring rotiert wird, wobei dann die Verbindung zwischen dem ersten und dem zweiten Anschlussstück gelöst ist.

Nachteilhaft an dieser Ausgestaltung ist, dass durch die Ausgestaltung des Drehrings relativ hohe Betätigungskräfte erforderlich sind, um die Verschlussgeometrie des Drehrings mit der Steckergeometrie außer Eingriff zu bringen.

Aufgabe der Erfindung ist es daher die Nachteile des Stands der Technik zu beseitigen und eine Vorrichtung bereit zu stellen, die werkzeuglos ver- und entriegelbar ist, geringe Betätigungskräfte erfordert und gleichzeitig eine sichere Verbindung der zu verbindenden Elemente erlaubt.

Die Hauptmerkmale der Erfindung sind im kennzeichnenden Teil von Anspruch 1 angegeben. Ausgestaltungen sind Gegenstand der Ansprüche 2 bis 10. Die Erfindung betrifft weiterhin eine Verbindungsanordnung nach Anspruch 10, wobei Ausgestaltungen der Verbindungsanordnung Gegenstand der Ansprüche 11 bis 13 sind.

Bei einem Verbinder nach dem Oberbegriff des Anspruchs 1 ist erfindungsgemäß vorgesehen, dass ein Verbindungselement über mindestens eine radial elastische Federgeometrie mit dem Drehring verbunden ist.

Besonders vorteilhaft an der erfindungsgemäßen Ausgestaltung ist, dass die radial elastische Federgeometrie eine radiale Bewegung der Verbindung des Verbindungselements ermöglicht. Durch die radial elastische Federgeometrie sind die Betätigungskräfte, insbesondere dann, wenn mehrere Verbindungselemente vorgesehen sind, gering. Hierdurch ist sichergestellt, dass ein Bediener eine einhändige Entriegelung des Verbinders vornehmen kann.

Bevorzugt sind das Gehäuse und der Drehring aus Kunststoff hergestellt. Dies ist besonders vorteilhaft, da sich das Gehäuse und der Drehring so beispielsweise mittels Spritzgießverfahren jeweils einteilig herstellen lassen. Der Drehring und das Gehäuse können alternativ auch aus anderen Materialien, beispielsweise aus Metall oder aus einer Materialkombination hergestellt sein. Der Verbinder ist besonders bevorzugt für den Einsatz in einem Kraftfahrzeug und insbesondere für den Einsatz in der Ladelufttechnik oder alternativ in einem Kühlsystem eines Kraftfahrzugs vorgesehen. Hierbei ist es besonders von Vorteil, dass die Handhabung des Verbinders einfach und leichtgängig ist, sodass die Montage und Demontage der Verbindung auch in beengten und schlecht einsehbaren Räumen, wie z.B. Motorräumen, erfolgen kann.

In einer bevorzugten Ausführungsform ist die Führungsgeometrie derart ausgebildet, dass in Umfangsrichtung mindestens eine und besonders bevorzugt zwei schräge Ebenen vorhanden sind, die derart gestaltet sind, dass sie in oder entgegen einer Umfangsrichtung eine Neigung aufweisen, wobei die schrägen Ebenen jeweils in radialer Richtung nach außen ansteigend ausgebildet sind. Die Führung des Verbindungselements über die eine schräge Ebene der Führungsgeometrie ermöglicht eine radiale Bewegung des Führungselements. Für den Fall, dass die Führungsgeometrie zwei schräge Ebenen aufweist, ist die Umfangsrichtung, in der der Drehgriff rotiert wird, vorteilhafterweise nicht mehr maßgebend, da das Verbindungselement in jeder Rotationsrichtung durch die Ebenen der Führungsgeometrie in einer radialen Richtung bewegt wird.

Erfindungsgemäß ist vorgesehen, dass das Verbindungselement in einer ersten Umfangsrichtung über die Federgeometrie und in einer zweiten, entgegengesetzten, Umfangsrichtung über einen Steg mit dem Drehring verbunden ist. Eine weitere bevorzugte Ausführungsform sieht vor, dass die Federgeometrie an der linken Seite ein Federelement aufweist und an der rechten Seite einen Steg. Eine besonders bevorzugte Ausführungsform sieht vor, dass die Federgeometrie an der linken Seite und an der rechten Seite ein Federelement aufweist. Dies ist besonders vorteilhaft, da die radiale Elastizität durch die Anordnung der Federelemente so noch weiter erhöht wird. Insbesondere die Anordnung von Federelementen auf der linken und auf der rechten Seite stellt eine deutliche Verbesserung der elastischen Eigenschaften der Anbindung des Federelements an den Drehring dar. Eine alternative Ausgestaltung dieser Ausführungsform sieht vor, dass die Federgeometrie an der linken Seite und an der rechten Seite einen Steg aufweist. Dadurch, dass an beiden Seiten Stege angeordnet sind, ergibt sich der Vorteil, dass durch die Führungsgeometrie eine Neigung des Verbindungselements in Richtung des zweiten Endes des Gehäuses eine Torsion der Stege erfolgt, wodurch ebenfalls eine Elastizität des Verbindungselements in radialer Richtung gegeben ist. Bevorzugt ist vorgesehen, dass die Federgeometrie ein Federelement aufweist, das insbesondere einstückig mit dem Drehring und dem Verbindungselement ausgebildet ist.

Bevorzugterweise ist vorgesehen, dass an dem Drehring in radialer Richtung außerhalb des jeweiligen Stegs eine Aussparung vorhanden ist. Dies ist vorteilhaft, da durch die Aussparung genug Raum für die Federbewegung der Federelemente vorhanden ist.

In einer Ausführungsform ist vorgesehen, dass an dem Drehring in der radial äußersten Position mindestens einen im Wesentlichen in axialer Richtung ausgerichteten Griff aufweist. Bevorzugterweise ist vorgesehen, dass der Drehring an einem radial äußeren Umfang eine Riffelung aufweist. Das Vorsehen des Griffs und/oder der Riffelung ist besonders vorteilhaft, da so eine sichere Handhabung des Entriegelungsmechanismusses gewährleistet ist. Außerdem ist so das notwendige Drehmoment zur Entriegelung des Verbinders sicher auf den Mechanismus übertragbar.

Eine bevorzugte Weiterbildung sieht vor, dass am zweiten Ende des Gehäuses in Umfangsrichtung eine umlaufende Ausklinkung vorgesehen ist und der Drehring eine Ausformung aufweist, die mit der Ausklinkung des Gehäuses in Eingriff steht. Durch diese besonders vorteilhafte Ausformung ist eine Lagerung des rotierbaren Drehrings gegeben. Diese Lagerung ist bevorzugt als Gleitlager zwischen dem Gehäuse und dem Drehring ausgebildet. Auf diese Weise wirken sich radiale Kräfte, die bei der Handhabung des Drehrings auftreten können, nicht direkt auf den Verriegelungsmechanismus aus, wodurch beispielsweise ein ungewolltes Entriegeln verhindert wird.

Eine weitere bevorzugte Ausführungsform sieht vor, dass der Verbinder einen Führungsring aufweist, der zwischen dem ersten Ende und dem Drehring innerhalb des Gehäuses angeordnet ist. Weiterhin ist besonders zweckmäßig, dass die mindestens eine Führungsgeometrie an dem Führungsring angeordnet ist. Dies ist besonders vorteilhaft, da der Führungsring ein mögliches Spiel des Drehrings in axialer Richtung ausgleichen kann, wenn er auf diese Weise angeordnet ist. Dadurch, dass die Führungsgeometrie vorteilhafterweise an dem Führungsring angeordnet ist, ist ein besonders kompakter Aufbau des Verbinders möglich.

Alternativ ist nach einer Ausführungsform vorgesehen, dass der Führungsring mindestens ein Positionierelement aufweist, das mit mindestens einer Nut des Gehäuses in Eingriff bringbar ist. Das Vorsehen einer solchen Verbindung, die beispielsweise eine Nut- und Federverbindung sein kann, weist den besonderen Vorteil auf, dass der Führungsring eindeutig in dem Gehäuse anordenbar ist und gleichzeitig dessen Rotation in Umfangsrichtung verhindert wird. Besonders bevorzugt sind die Positionierelemente als quaderförmige Ausformungen vorgesehen, die mit entsprechenden Aushöhlungen in der Innenwand des Gehäuses in Eingriff bringbar sind.

Eine besonders zweckmäßige Ausführungsform sieht vor, dass ein Dichtungsring zwischen dem Gehäuse und dem Führungsring an einer Innenseite des Gehäuses angeordnet ist, wobei insbesondere der Führungsring in axialer Richtung zwischen dem Dichtungsring und dem an dem zweiten Ende des Gehäuses angeordneten Drehring angeordnet ist. Dies ist vorteilhaft, weil der Dichtungsring auf diese Weise das Innere des Verbinders gegen die Umgebung abdichten kann, wobei bei einem erhöhten Innendruck der Dichtungsring gegen den Führungsring gepresst wird und dort den Verbinder abdichtet. Insbesondere sind solch hohe Innendrücke dann zu erwarten, wenn die Fluide, die in den zu verbindenden Fluidleitungen fließen, viel thermische Energie aufnehmen. Dies ist beispielsweise bei Ladeluftsystemen oder Kühlwasserkreisläufen der Fall. Besonders bevorzugt ist dabei der Dichtungsring als O-Ring ausgebildet. Alternativ kann hierbei der Dichtungsring auch als Y-Ring oder X-Ring ausgestaltet sein.

In einer Ausführungsform ist vorgesehen, dass der Drehring einen Einschnitt aufweist. Daran ist vorteilhaft, dass durch den Einschnitt ist Drehring mit einem Gegenstück in Eingriff bringbar ist. Das Gegenstück kann dabei bevorzugt derart ausgebildet sein, dass der Drehring nur in einer, in Umfangsrichtung gesehen, definierten Position mit dem Gegenstück in Eingriff bringbar ist. Dies ist besonders vorteilhaft, da auf diese Weise der Drehgriff beispielsweise während des Herstellens einer Verbindung definiert angeordnet ist.

Weiterhin ist für eine Verbindungsanordnung mit einem erfindungsgemäßen Verbinder vorgesehen, dass sie einen Stutzen aufweist, der in axialer Richtung in das Gehäuse einführbar ist, wobei der Stutzen eine Sicherungsgeometrie aufweist, die mit dem mindestens einen Verbindungselement des Verbinders in Eingriff bringbar ist, wobei die Sicherungsgeometrie in axialer Richtung nebeneinander einen ersten Flansch und insbesondere einen zweiten Flansch aufweist, welche in Umfangsrichtung des Stutzens umlaufen und am äußeren Umfang des Stutzens angeordnet sind. Für die Verbindungsanordnung ist insbesondere vorteilhaft, dass das mindestens eine Verbindungselement mit der Sicherungsgeometrie des Stutzens in Eingriff bringbar ist. Auf diese Weise ist sichergestellt, dass der Stutzen nicht in axialer Richtung aus dem Verbinder entnehmbar ist, ohne dass die Verbindungselemente durch entsprechendes Rotieren des Drehgriffs in Umfangsrichtung entriegelt werden.

Weiterhin sieht eine bevorzugte Ausführungsform der Verbindungsanordnung vor, dass der erste Flansch eine in Richtung des ersten Endes des Gehäuses geneigte Seite aufweist. Besonders vorteilhaft ist nach einer Ausführungsform der Verbindungsanordnung vorgesehen, dass der erste Flansch und der zweite Flansch jeweils eine in Richtung des ersten Endes des Gehäuses geneigte Seite aufweisen. Bevorzugterweise ist für die Verbindungsanordnung vorgesehen, dass der Stutzen in axialer Richtung nach dem zweiten Flansch einen dritten Flansch aufweist, der am äußeren Umfang des Stutzens angeordnet ist, wobei der dritte Flansch eine in Richtung des ersten Endes des Gehäuses geneigte Seite aufweist. Durch diese vorteilhafte Ausgestaltung des ersten Flansches ist eine besonders einfache Montage des Stutzens in dem Verbinder möglich. Dadurch, dass das Verbindungselement eine radiale Elastizität aufweist, ist ein einfaches Einschieben des Stutzens mit der geneigten Seite des ersten Flansches in den Verbinder möglich, ohne, dass der Verbinder entriegelt werden muss. Auf diese Weise ist der Stutzen bevorzugt vollautomatisiert an den Verbinder montierbar.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Explosionsdarstellung des Verbinders,
- Fig. 2: einen gedrehten Schnitt der Verbindungsanordnung mit einem eingeführten Stutzen,
- Fig. 3: einen Schnitt der Verbindungsanordnung mit einem eingeführten Stutzen und
- Fig. 4: einen weiteren Schnitt der Verbindungsanordnung mit einem eingeführten Stutzen.

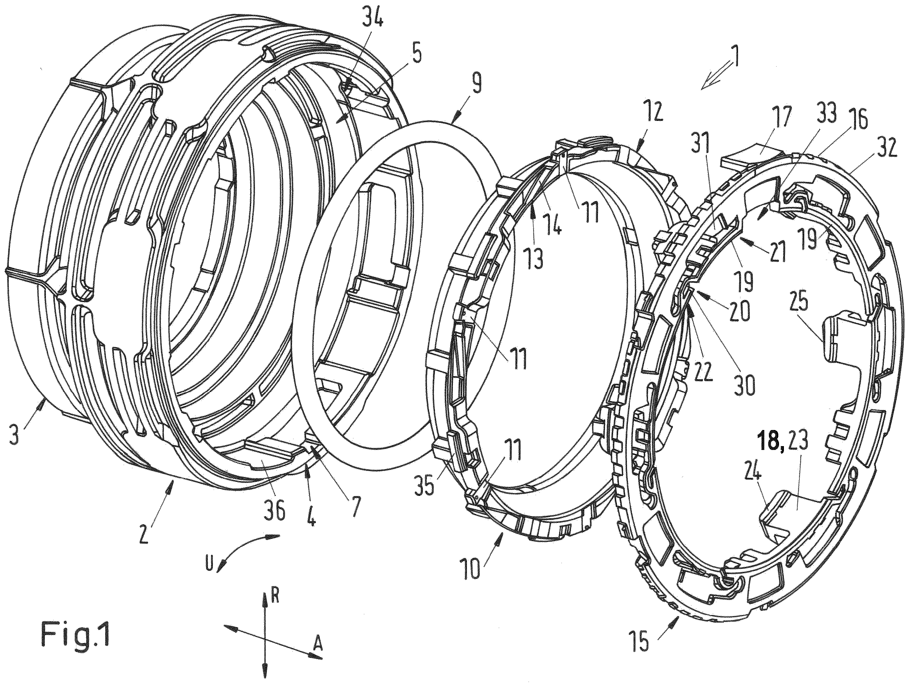

Figur 1 zeigt eine Explosionsdarstellung des Verbinders 1 mit einem Gehäuse 2, wobei das Gehäuse 2 als ein im Wesentlichen zylindrischer Körper ausgebildet ist, der in einer axialen Richtung A ein erstes Ende 3 und ein zweites Ende 4 aufweist. Das Gehäuse 2 ist somit als Tubus ausgebildet und weist eine Innenseite 5 auf. Im Bereich des zweiten Endes 4 ist an der Innenseite 5 des Gehäuses 2 eine Haltegeometrie 6 angeordnet, die als eine in Umfangrichtung U verlaufende Nut ausgebildet ist. Das Gehäuse 2 weist weiterhin im Bereich des zweiten Endes 4 Nuten 7 auf, die in axialer Richtung verlaufen. An dem ersten Ende 3 des Gehäuses 2 ist ein in Umfangsrichtung U verlaufender Einschnitt 8 angeordnet, der sich in axialer Richtung A in das Gehäuse 2 hinein erstreckt. Ein Dichtungsring 9 des Verbinders 1 ist als O-Ring ausgebildet.

Ein Führungsring 10 weist Positionierelemente 11 auf, die mit den Nuten 7 des Gehäuses 2 in Eingriff bringbar sind. Die Positionierelemente 11 sind als quaderförmige Ausformungen ausgebildet und erstrecken sich in radialer Richtung R. Die Nuten 7 des Gehäuses 2 weisen eine, den Positionierelementen 11 entsprechende, Formgebung auf, wobei die Positionierelemente 11 in Verrastungsbereichen 34 der Nuten 7 verrasten. Die Positionierelemente 11 verhindern, dass der Führungsring 10 in Umfangsrichtung U rotierbar ist. Darüber hinaus sind sich radial erstreckende Zuordnungsausformungen 35 an der radial äußeren Fläche des Führungsrings angebracht, die mit entsprechenden Zurodnungsaussparungen 36 des Gehäuses in Eingriff bringbar sind. Der Führungsring 10 weist an einem Ende einen Führungsflansch 12 auf, in dem Führungsgeometrien 13 als Einschnitte angeordnet sind. Jede der Führungsgeometrien 13 weist eine schräge Führungsfläche 14 auf, die in Umfangsrichtung U in im Wesentlichen plane Flächen übergeht. Der Verbinder weist weiterhin einen Drehring 15 auf, der im Wesentlichen als Kreisringscheibe ausgebildet ist. An der radial äußeren Seite des Drehrings 15 sind eine Riffelung 16 sowie ein Griff 17 angebracht, die die Betätigung des Drehrings 15, nämlich die Rotation des Drehrings 15 in Umfangsrichtung U, erleichtern. Der Griff 17 erstreckt sich in axialer Richtung A und steht somit im Wesentlichen senkrecht auf der Kreisringfläche des Drehrings 15. An der radial inneren Seite des Drehrings 15 sind Verbindungselemente 18 angeordnet, die sich in axialer Richtung A erstrecken und somit senkrecht zu der Kreisringfläche des Drehrings 15 angeordnet sind. Die Verbindungselemente 18 sind Federgeometrien 22 in radialer Richtung R beweglich an dem Drehring 15 angeordnet. Die Federgeometrien weisen Stege auf, die an dem inneren Umfang des Drehrings 15 liegen, wobei über den Stegen 19 Aussparungen 31 angeordnet sind, welche sich nicht über den äußeren Umfang des Drehrings 15 hinaus erstrecken. Die Verbindungselemente 18 sind in Umfangsrichtung U zentriert an den elastischen Federgeometrien 22 angeordnet, sodass die Federgeometrien 22 linke Seiten 20 und rechte Seiten 21 aufweisen. Die linken Seiten 20 der Federgeometrien 22 sind in diesem Ausführungsbeispiel durch die Federelemente 30 gebildet, wobei die rechten Seiten durch Stege 19 gebildet sind.

Die Verbindungselemente 18 sind im Wesentlichen quaderförmig ausgebildet und über plane Verbindungsflächen 23 an den Federgeometrien 22 angebracht. Weiterhin weisen die Verbindungselemente 18 an dem vom Drehring 15 abgewandten Ende eine in radialer Richtung R in Bezug auf den Drehring 15 nach innen zeigende Rastgeometrie 24 auf. An der axial vom Drehring 15 abgewandten Seite weisen die Verbindungselemente 18 eine Führungsausformung 25 auf, die mit der Führungsgeometrie 13 in Eingriff bringbar ist. Durch die Führungsgeometrie 13 wird bei einer in Umfangsrichtung U erfolgenden Rotation des Drehrings 15 die Führungsausformung 25 entlang der Führungsgeometrie 13 bewegt, sodass das Verbindungselement 18 durch die schräge Führungsfläche 14 der Führungsgeometrie 13 radial nach außen bewegbar ist. Die Federelemente 30 der Federgeometrien 22 ermöglichen außerdem eine Verkippung des Verbindungselements 18 sodass die Führungsausformung 25 sich an die schräge Führungsfläche 14 anlegen kann. Außerdem wird durch die Ausgestaltung der Federgeometrien 22 und insbesondere durch die Federelemente 30 eine Torsion der Federgeometrien 22 ermöglicht, wenn die Verbindungselemente 18 durch die Führungsausformung 25 entlang der schrägen Führungsfläche 14 in radialer Richtung R bewegt werden, wodurch sich die Position der Rastgeometrie 24 zusätzlich verlagert.

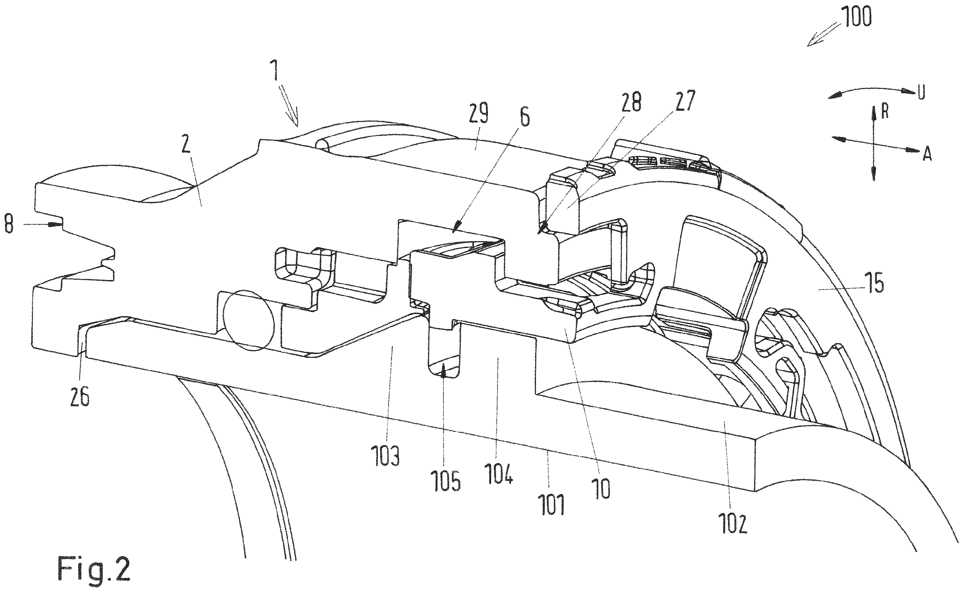

Figur 2 zeigt den Verbinder 1 als Verbindungsanordnung 100 mit einem Stutzen 101. Das Gehäuse 2 ist an ihrer Innenseite 5 stufenförmig ausgestaltet, wobei der Innendurchmesser des Gehäuses 2 von dem ersten Ende 3 zum zweiten Ende 4 hin zunimmt. Der Stutzen 101 ist im Wesentlichen ein Tubus, der an seinem äußeren Umfang 102 voneinander beabstandete Flansche 103, 104 aufweist. Der Stutzen 101 ist in das Gehäuse 2 bis zu einem Anschlag 26, der durch eine Stufe gebildet wird, einführbar. Der Dichtungsring 9 ist in der zweiten Stufe angeordnet, sodass dieser in radialer Richtung R zwischen dem Gehäuse 2 und dem Stutzen 100 liegt. In axialer Richtung A liegt von dem Dichtungsring 9 aus gesehen in Richtung des zweiten Endes 4 des Gehäuses 2 der Führungsring 10 und in entgegengesetzter Richtung das Gehäuse 2. Der Führungsring 10 erstreckt sich in radialer Richtung R und axialer Richtung A bis in die dritte Stufe des Gehäuses 2 und ist derart ausgeformt, dass ein erster Flansch 103 des Stutzens unter dem Führungsring 10 anordenbar ist. Das Verbindungselement 18 des Drehrings 15 steht mit der Führungsgeometrie 13 des Führungsrings 10 über die Führungsausformung 25 des Verbindungselements 18 in Eingriff, wobei die Rastgeometrie 24 in axialer Richtung A zwischen dem ersten Flansch 103 und dem zweiten Flansch 104 des Stutzens 101 in einer Sicherungsgeometrie 105 positioniert ist. In radialer Richtung R oberhalb des Verbindungselements 18 liegt die Haltegeometrie 6 des Gehäuses 2, wobei das Verbindungselement 18 zumindest teilweise in der Haltegeometrie 6 angeordnet ist. Der radiale Abstand des Verbindungselements 18 von dem Gehäuse 2 entspricht zumindest der radialen Distanz, die das Verbindungselement 18 durch die Führungsgeometrie 13 bei Rotation des Drehrings 15 in Umfangsrichtung U zurücklegt. Der Drehring 15 ist an dem zweiten Ende des Gehäuses 2 angeordnet, sodass die Kreisringscheibe des Drehrings 15 außerhalb des Gehäuses 2 liegt und die Verbindungsflächen 23 in Richtung des ersten Endes 3 des Gehäuses 2 in das Gehäuse 2 hineinragen. Der Drehring 15 weist weiterhin eine Ausformung 27 auf, die mit einer Ausklinkung 28 korrespondiert, wobei letztere an dem zweiten Ende 4 des Gehäuses 2 und an der äußeren Mantelfläche 29 des Gehäuses 2 liegt. Der Griff 17 des Drehrings 15 ragt in Richtung des ersten Endes 3 über die äußere Mantelfläche 29 des Gehäuses 2. Der Drehring weist einen Einschnitt 33 auf, der mit einem nicht dargestellten Gegenstück in Eingriff bringbar ist. Hierbei sind der Einschnitt 33 und das Gegenstück nur dann in Eingriff bringbar, wenn sich der Drehring 15, in Umfangsrichtung U rotiert, in einer definierten Position befindet.

Figur 2 zeigt einen Stutzen 101 mit einem ersten Flansch 103, dessen in Richtung der ersten Seite des Gehäuses liegende, Seite geneigt ist. Der zweite Flansch 104 ist im Querschnitt im Wesentlichen quaderförmig ausgebildet. Die Sicherungsgeometrie 105 ist zwischen dem ersten Flansch 103 und dem zweiten Flansch 104 angeordnet.

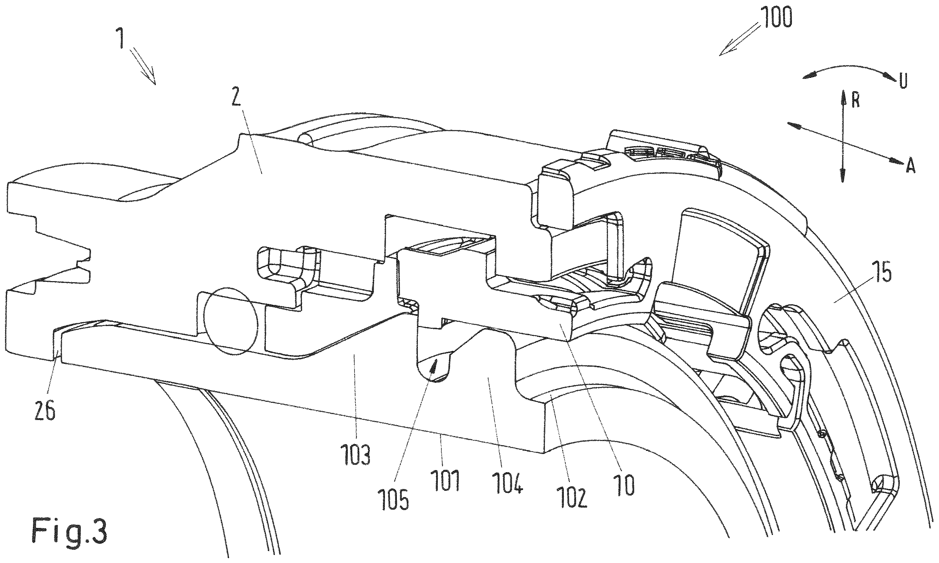

Beim Einführen des Stutzens 101 in das Gehäuse 2 liegt die Rastgeometrie 24 auf der geneigten Seite des ersten Flansches 103 auf, wodurch das Verbindungselement 18 radial nach außen bewegt wird. Dies wird durch den Steg 19 und die Federgeometrie 22 des Stegs ermöglicht. Nachdem der Stutzen 101 in das Gehäuse 2 eingeführt ist, rastet das Verbindungselement 18 in der Sicherungsgeometrie 105 des Stutzens 101 ein, wobei die Rastgeometrie 24 in axialer Richtung A durch senkrecht verlaufende Flächen der Flansche, die in axialer Richtung A die Sicherungsgeometrie 105 bilden, umgeben ist. Somit ist die Anordnung des Stutzens 101 in dem Gehäuse 2 in axialer Richtung A festgelegt. Ein Herauslösen des Stutzens 101 aus dem Gehäuse 2 ist nur durch Rotieren des Drehrings 15 in Umfangsrichtung U möglich, wodurch die Verbindungselemente 18 über die Führungsgeometrien 13 in radialer Richtung R bewegt werden, sodass die Rastgeometrien 24 außer Eingriff mit der Sicherungsgeometrie 105 kommen. An dem Einschnitt 8 des Gehäuses 2, der an dessen ersten Ende 3 angeordnet ist, ist beispielsweise ein weiterer, nicht dargestellter, Tubus anbringbar, sodass der Verbinder 1 den weiteren Tubus und den Stutzen 101 verbindet. Figur 3 zeigt den Verbinder 1 als Verbindungsanordnung 100 mit einem Stutzen 101, der einen ersten Flansch 103 und einen zweiten Flansch 104 aufweist, wobei beide Flansche 103, 104 geneigte Seiten aufweisen, die in Richtung des ersten Endes 3 des Gehäuses 2 liegen. Die Sicherungsgeometrie 105 ist zwischen dem ersten Flansch 103 und dem zweiten Flansch 104 angeordnet.

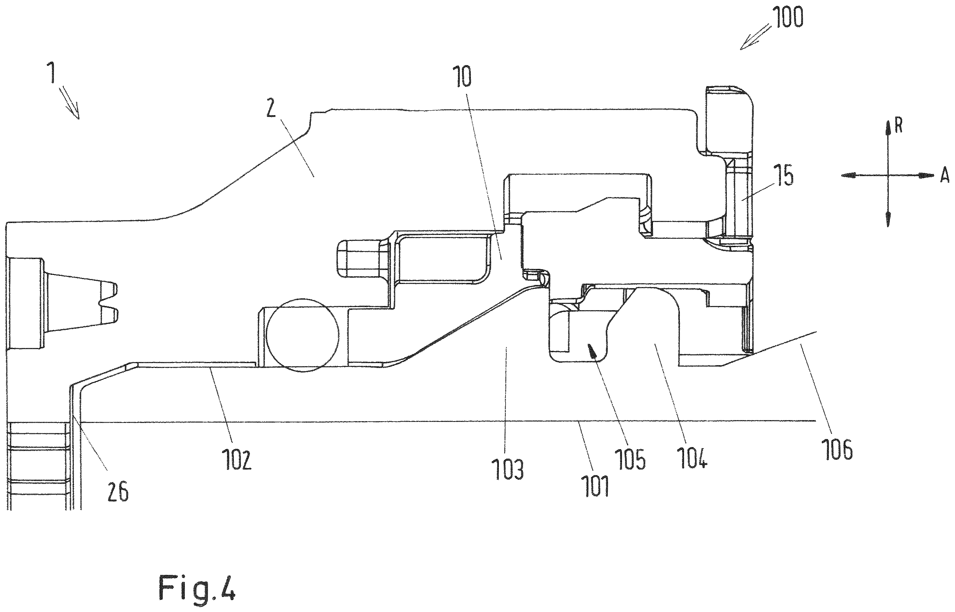

Figur 4 zeigt den Verbinder 1 als Verbindungsanordnung 100 mit einem Stutzen 101, der einen ersten Flansch 103, einen zweiten Flansch 104 und einen dritten Flansch 106 aufweist, wobei alle Flansche 103, 104, 106 geneigte Seiten aufweisen, die in Richtung des ersten Endes 4 des Gehäuses 2 liegen. Der dritte Flansch 106 liegt außerhalb des Gehäuses 2. Die Sicherungsgeometrie 105 ist zwischen dem ersten Flansch 103 und dem zweiten Flansch 104 angeordnet.

**Bezugszeichenliste**

| | | | |
|---|---|---|---|
| 1. | Verbinder | 25. | Führungsausformung |
| 2. | Gehäuse | 26. | Anschlag |
| 3. | erstes Ende | 27. | Ausformung |
| 4. | zweites Ende | 28. | Ausklinkung |
| 5. | Innenseite | 29. | äußere Mantelfläche |
| 6. | Haltegeometrie | 30. | Federelement |
| 7. | Nuten | 31. | Aussparung |
| 8. | Einschnitt | 32. | äußerer Umfang |
| 9. | Dichtungsring | 33. | Einschnitt |
| 10. | Führungsring | 34. | Verrastungsbereiche |
| 11. | Positionierelemente | 35. | Zuordnungsausformungen |
| 12. | Führungsflansch | 36. | Zuordnungsaussparungen |
| 13. | Führungsgeometrien | | |
| 14. | Führungsfläche | 100. | Verbindungsanordnung |
| 15. | Drehring | 101. | Stutzen |
| 16. | Riffelung | 102. | äußerer Umfang |
| 17. | Griff | 103. | erster Flansch |
| 18. | Verbindungselemente | 104. | zweiter Flansch |
| 19. | Stege | 105. | Sicherungsgeometrie |
| 20. | linke Seite | 106. | dritter Flansch |
| 21. | rechte Seite | | |
| 22. | Federgeometrie | R | radiale Richtung |
| 23. | Verbindungsflächen | A | axiale Richtung |
| 24. | Rastgeometrie | U | Umfangsrichtung |

## Patentansprüche

1. Verbinder (1) für eine Fluiddichtung, aufweisend ein ringförmiges Gehäuse (2) mit einem ersten Ende (3) und einem zweiten Ende (4) und einen Drehring (15), wobei der Drehring (15) an dem zweiten Ende (4) angeordnet ist und der Drehring (15) mindestens ein Verbindungselement (18) aufweist, das mit mindestens einer Haltegeometrie (6) und mit mindestens einer Führungsgeometrie (13) in Eingriff steht, wobei das mindestens eine Verbindungselement (18) durch die Führungsgeometrie (13) bei Rotation des Drehrings (15) relativ zum Gehäuse (2) in einer radialen Richtung (R) bewegbar ist, wobei das mindestens eine Verbindungselement (18) über mindestens eine radial elastische Federgeometrie (22) mit dem Drehring (15) verbunden ist, **dadurch gekennzeichnet, dass** das mindestens eine Verbindungselement (18) in einer ersten Umfangsrichtung (U) über die Federgeometrie (22) und in einer zweiten, entgegengesetzten, Umfangsrichtung über einen Steg (19) mit dem Drehring (15) verbunden ist.

2. Verbinder (1) nach Anspruch 1, **dadurch gekennzeichnet, dass** an dem Drehring (15) in radialer Richtung (R) außerhalb des jeweiligen Stegs (19) eine Aussparung (31) vorhanden ist.

3. Verbinder (1) nach einem der vorhergehenden Ansprüche, **dadurch gekennzeichnet, dass** an dem Drehring (15) in der radial äußersten Position mindestens einen im Wesentlichen in axialer Richtung (A) ausgerichteten Griff (17) aufweist.

4. Verbinder (1) nach einem der vorhergehenden Ansprüche, **dadurch gekennzeichnet, dass** der Drehring (15) an einem radial äußeren Umfang (32) eine Riffelung (16) aufweist.

5. Verbinder (1) nach einem der vorhergehenden Ansprüche, **dadurch gekennzeichnet, dass** am zweiten Ende (4) des Gehäuses (2) in Umfangsrichtung (U) eine umlaufende Ausklinkung (28) vorgesehen ist und der Drehring (15) eine Ausformung (27) aufweist, die mit der Ausklinkung (28) des Gehäuses (2) in Eingriff steht.

6. Verbinder (1) nach einem der vorhergehenden Ansprüche, **dadurch gekennzeichnet, dass** der Verbinder (1) einen Führungsring (10) aufweist, der zwischen dem ersten Ende (3) und dem Drehring (15) innerhalb des Gehäuses (2) angeordnet ist.

7. Verbinder (1) nach Anspruch 6, **dadurch gekennzeichnet, dass** die mindestens eine Führungsgeometrie (13) an dem Führungsring (10) angeordnet ist.

8. Verbinder (1) nach einem der Ansprüche 6 oder 7, **dadurch gekennzeichnet, dass** der Führungsring (10) mindestens ein Positionierelement (11) aufweist, das mit mindestens einer Nut (7) des Gehäuses (2) in Eingriff bringbar ist.

9. Verbinder (1) nach einem der Ansprüche 6 bis 8, **dadurch gekennzeichnet, dass** ein Dichtungsring (9) zwischen dem Gehäuse (2) und dem Führungsring (10) an einer Innenseite (5) des Gehäuses (2) angeordnet ist, wobei insbesondere der Führungsring (10) in axialer Richtung (A) zwischen dem Dichtungsring (9) und dem an dem zweiten Ende (4) des Gehäuses (2) angeordneten Drehring (15) angeordnet ist.

10. Verbindungsanordnung (100) mit einem Verbinder (1) nach einem der vorhergehenden Ansprüche, **dadurch gekennzeichnet, dass** sie einen Stutzen (101) aufweist, der in axialer Richtung (A) in das Gehäuse (2) einführbar ist, wobei der Stutzen (101) eine Sicherungsgeometrie (105) aufweist, die mit dem mindestens einen Verbindungselement (18) des Verbinders (1) in Eingriff bringbar ist, wobei die Sicherungsgeometrie (105) in axialer Richtung (A) nebeneinander einen ersten Flansch (103) und einen zweiten Flansch (104) aufweist, welche in Umfangsrichtung (U) des Stutzens (101) verlaufen und am äußeren Umfang des Stutzens angeordnet sind.

11. Verbindungsanordnung (100) nach Anspruch 10, **dadurch gekennzeichnet, dass** der erste Flansch (103) eine in Richtung des ersten Endes (3) des Gehäuses (2) geneigte Seite aufweist.

12. Verbindungsanordnung (100) nach Anspruch 11, **dadurch gekennzeichnet, dass** der erste Flansch (103) und der zweite Flansch (104) jeweils eine in Richtung des ersten Endes (3) des Gehäuses (2) geneigte Seite aufweisen.

13. Verbindungsanordnung (100) nach Anspruch 12, **dadurch gekennzeichnet, dass** der Stutzen (101) in axialer Richtung (A) nach dem zweiten Flansch (104) einen dritten Flansch (105) aufweist, der am äußeren Umfang des Stutzens angeordnet ist, wobei der dritte Flansch (105) eine in Richtung des ersten Endes (3) des Gehäuses (2) geneigte Seite aufweist.

## Claims

1. Connector (1) for a fluid seal, comprising an annular housing (2) with a first ending (3) and a second ending (4) and a rotating ring (15), wherein the rotating ring (15) is arranged at the second ending (4) and the rotating ring (15) comprises at least one connecting element (18) which engages with at least one retaining geometry (6) and with at least one guiding geometry (13), wherein the at least one connecting element (18) is movable in a radial direction (R) by the guide geometry (13) during rotation of the rotary ring (15) relative to the housing (2), wherein the at least one connecting element (18) is connected to the rotary ring (15) via at least one radially elastic spring geometry (22), **characterised in that** the at least one connecting element (18) is connected to the rotating ring (15) in a first circumferential direction (U) via the spring geometry (22) and in a second, opposite, circumferential direction via a fillet (19).

2. Connector (1) according to claim 1, **characterised in that** a recess (31) is present on the rotary ring (15) in the radial direction (R) outside the respective fillets (19).

3. Connector (1) according to one of the preceding claims, **characterised in that** it has at least one handle (17) on the swivel ring (15) in the radially outermost position, which handle is oriented substantially in the axial direction (A).

4. Connector (1) according to one of the preceding claims, **characterised in that** the rotary ring (15) has a fluting (16) on a radially outer circumference (32).

5. Connector (1) according to one of the preceding claims, **characterised in that** a circumferential notch (28) is provided at the second ending (4) of the housing (2) in the circumferential direction (U) and the rotary ring (15) has a recess (27) which engages with the notch (28) of the housing (2).

6. Connector (1) according to one of the preceding claims, **characterised in that** the connector (1) has a guide ring (10) arranged between the first ending (3) and the rotating ring (15) inside the housing (2).

7. Connector (1) according to claim 6, **characterised in that** the at least one guide geometry (13) is mounted on the guide ring (10).

8. Connector (1) according to one of claims 6 or 7, **characterised in that** the guide ring (10) has at least one positioning element (11) which can be brought into engagement with at least one groove (7) of the housing (2).

9. Connector (1) according to one of claims 6 to 8, **characterised in that** a sealing ring (9) is arranged between the housing (2) and the guide ring (10) on an inner side (5) of the housing (2), wherein in particular the guide ring (10) is arranged in axial direction (A) between the sealing ring (9) and the rotating ring (15) arranged at the second ending (4) of the housing (2).

10. Connection assembly (100) with a connector (1) according to one of the preceding claims, **characterised in that** it has a socket (101) which can be inserted into the housing (2) in the axial direction (A), the socket (101) having a securing geometry (105), which can be brought into engagement with the at least one connecting element (18) of the connector (1), wherein the securing geometry (105) has a first flange (103) and a second flange (104) next to one another in the axial direction (A), which extend in the circumferential direction (U) of the connecting piece (101) and are arranged on the outer circumference of the connecting piece.

11. Connection arrangement (100) according to claim 10, **characterised in that** the first flange (103) has a side inclined in the direction of the first ending (3) of the housing (2).

12. Connection arrangement (100) according to claim 11, **characterised in that** the first flange (103) and the second flange (104) each have a side inclined in the direction of the first ending (3) of the housing (2).

13. A joint assembly (100) according to claim 12, **characterised in that** the stub (101) has, in the axial direction (A) after the second flange (104), a third flange (105) located on the outer periphery of the stub, the third flange (105) having a side inclined towards the first end (3) of the housing (2).

## Revendications

1. Connecteur (1) pour un joint d'étanchéité pour fluide, présentant un boîtier (2) annulaire avec une première extrémité (3) et une deuxième extrémité (4) et un anneau rotatif (15), dans lequel l'anneau rotatif (15) est agencé à la deuxième extrémité (4) et l'anneau rotatif (15) présente au moins un élément de liaison (18), qui est en prise avec au moins une géométrie de retenue (6) et avec au moins une géométrie de guidage (13), dans lequel l'au moins un élément de liaison (18) est déplaçable par la géométrie de guidage (13) lors de la rotation de l'anneau rotatif (15) par rapport au boîtier (2) dans une direction radiale (R), dans lequel l'au moins un élément de liaison (18) est relié à l'anneau rotatif (15) par le biais d'au moins une géométrie de ressort (22) radialement élastique, **caractérisé en ce que** l'au moins un élément de liaison (18) est relié à l'anneau rotatif (15) dans une première direction circonférentielle (U) par le biais de la géométrie de ressort (22) et dans une deuxième direction circonférentielle, opposée, par le biais d'une traverse (19).

2. Connecteur (1) selon la revendication 1, **caractérisé en ce qu'**un évidement (31) est présent au niveau de l'anneau rotatif (15) dans la direction radiale (R) à l'extérieur de la traverse (19) respective.

3. Connecteur (1) selon l'une quelconque des revendications précédentes, **caractérisé en ce qu'**il présente au niveau de l'anneau rotatif (15) dans la position radialement la plus extérieure au moins une prise (17) orientée sensiblement dans la direction axiale (A).

4. Connecteur (1) selon l'une quelconque des revendications précédentes, **caractérisé en ce que** l'anneau rotatif (15) présente une cannelure (16) au niveau d'une circonférence radialement extérieure (32).

5. Connecteur (1) selon l'une quelconque des revendications précédentes, **caractérisé en ce qu'**une encoche périphérique (28) est prévue à la deuxième extrémité (4) du boîtier (2) dans la direction circonférentielle (U) et l'anneau rotatif (15) présente une forme (27), qui est en prise avec l'encoche (28) du boîtier (2).

6. Connecteur (1) selon l'une quelconque des revendications précédentes, **caractérisé en ce que** le connecteur (1) présente un anneau de guidage (10), qui est agencé entre la première extrémité (3) et l'anneau rotatif (15) à l'intérieur du boîtier (2).

7. Connecteur (1) selon la revendication 6, **caractérisé en ce que** l'au moins une géométrie de guidage (13) est agencée au niveau de l'anneau de guidage (10).

8. Connecteur (1) selon l'une quelconque des revendications 6 ou 7, **caractérisé en ce que** l'anneau de guidage (10) présente au moins un élément de positionnement (11), qui peut être mis en prise avec au moins une rainure (7) du boîtier (2).

9. Connecteur (1) selon l'une quelconque des revendications 6 ou 8, **caractérisé en ce qu'**une bague d'étanchéité (9) est agencée entre le boîtier (2) et l'anneau de guidage (10) au niveau d'un côté intérieur (5) du boîtier (2), dans lequel en particulier l'anneau de guidage (10) est agencé dans la direction axiale (A) entre la bague d'étanchéité (9) et l'anneau rotatif (15) agencé à la deuxième extrémité (4) du boîtier (2).

10. Ensemble de liaison (100) avec un connecteur (1) selon l'une quelconque des revendications précédentes, **caractérisé en ce qu'**il présente un support (101), qui peut être introduit dans la direction axiale (A) dans le boîtier (2), dans lequel le support (101) présente une géométrie de sécurité (105), qui peut être mise en prise avec l'au moins un élément de liaison (18) du connecteur (1), dans lequel la géométrie de sécurité (105) présente dans la direction axiale (A) l'une à côté de l'autre une première bride (103) et une deuxième bride (104), lesquelles s'étendent dans la direction circonférentielle (U) du support (101) et sont agencées au niveau de la circonférence extérieure du support.

11. Ensemble de liaison (100) selon la revendication 10, **caractérisé en ce que** la première bride (103) présente un côté incliné en direction de la première extrémité (3) du boîtier (2).

12. Ensemble de liaison (100) selon la revendication 11, **caractérisé en ce que** la première bride (103) et la deuxième bride (104) présentent respectivement un côté incliné en direction de la première extrémité (3) du boîtier (2).

13. Ensemble de liaison (100) selon la revendication 12, **caractérisé en ce que** le support (101) présente dans la direction axiale (A) après la deuxième bride (104) une troisième bride (105), qui est agencée au niveau de la circonférence extérieure du support, dans lequel la troisième bride (105) présente un côté incliné en direction de la première extrémité (3) du boîtier (2).
